# EUROPÄISCHE PATENTSCHRIFT

(11) **EP 4 184 031 B1**
(45) Veröffentlichungstag und Bekanntmachung des Hinweises auf die Patenterteilung: **05.03.2025**
(21) Anmeldenummer: 21208932.0
(22) Anmeldetag: 18.11.2021
(51) Int. Cl.: F16D 55/2265

(54) **BREMSSATTEL FÜR EINE FAHRZEUGBREMSE**
BRAKE CALIPER FOR A VEHICLE BRAKE
ÉTRIER DE FREIN POUR UN FREIN DE VÉHICULE

(43) Veröffentlichungstag der Anmeldung: 24.05.2023
(73) Patentinhaber: ZF CV Systems Europe BV, 1170 Brussels (BE)
(72) Erfinder: FRANK, Jochen, 67071 Ludwigshafen (DE)
(74) Vertreter: Ohlendorf, Henrike

(56) Entgegenhaltungen:
- DE-A1- 102018 006 341
- DE-U1- 9 105 358

## Beschreibung

Die Erfindung betrifft einen Bremssattel für eine Fahrzeugbremse, insbesondere eine Nutzfahrzeug-Scheibenbremse, aufweisend eine Bolzenführung zum axialen Verschieben des Bremssattels zu einem Bremsträger, und einen relativ zur Bolzenführung axial verschieblichen Bolzen, wobei die Bolzenführung eine den Bolzen umgebende Buchse aufweist. Die Erfindung betrifft des Weiteren ein Kit für eine Bolzenführung eines solchen Bremssattels.

Mithilfe solcher Bremssättel werden die Bremsbeläge einer Fahrzeugbremse aufgenommen und zu beiden Seiten einer Bremsscheibe der Fahrzeugbremse in Position gehalten. Um die Beweglichkeit des Bremssattels und damit eine gleichmäßige Bremswirkung der Bremsbeläge an der Bremsscheibe zu bewirken, weist der Bremssattel eine Bolzenführung auf, mittels der der Bremssattel beweglich zu und insbesondere an einem Bremsträger und der Bremsscheibe der Fahrzeugbremse gehalten ist. Innerhalb der Bolzenführung ist ein Bolzen angeordnet, wobei zwischen der Bolzenführung und dem Bolzen in axialer Richtung gesehen eine Relativbewegung stattfindet, um ein axiales Ausrichten der Bremsbeläge zur Bremsscheibe zu ermöglichen. Der Bolzen ist vorzugsweise bezogen auf den Bremsenträger ortsfest angeordnet, wohingegen der Bremssattel vorzugsweise axial verschoben wird. Die Verschieblichkeit in der Bolzenführung wird dadurch gewährleistet, dass zwischen Bolzenführung und Bolzen ausreichend Spiel herrscht.

Das Dokument DE 10 2018 006341 A1 kann als Stand der Technik zitiert werden.

Jedoch können im Betrieb des Fahrzeuges, insbesondere durch das vorhandene Spiel zwischen Bolzenführung und Bolzen, unerwünschte Störgeräusche, insbesondere Klappergeräusche, auftreten. Solche Geräusche an den Bremsen von Nutzfahrzeugen, die zur Personenbeförderung verwendet werden, werden insbesondere von dem Fahrer und/oder den Fahrgästen als störend wahrgenommen. Um den Störgeräuschen entgegenzuwirken, wurde beispielsweise versucht, dem Radialspiel zwischen Bolzenführung und Bolzen durch eine erhöhte Genauigkeit bei der Herstellung der Bauteile zu begegnen, was sich nur bedingt umsetzen ließ. Mit zunehmendem Verschleiß wurde das Spiel größer und damit die auftretenden Störgeräusche wieder verstärkt.

Der Erfindung lag die Aufgabe zugrunde, den oben angeführten Nachteilen auf vereinfachte Weise zu begegnen. Insbesondere lag der Erfindung die Aufgabe zugrunde, einen Bremssattel der vorbezeichneten Gattung bereitzustellen, bei dem die Geräuschentstehung auf einfache Weise vermindert wird.

Die Erfindung löst die ihr zugrundeliegende Aufgabe bei einem Bremssattel der vorbezeichneten Gattung mit den Merkmalen des Gegenstands von Anspruch 1. Insbesondere weist der Bremssattel zusätzlich zu der Buchse ein im Spalt zwischen der Buchse und dem Bolzen angeordnetes Spiel-Ausgleichselement auf, wobei das Spiel-Ausgleichselement an der Buchse und dem Bolzen anliegt, und zumindest abschnittsweise elastisch verformbar ist.

Erfindungsgemäß wird hier der Ansatz verfolgt, dass mit dem Spiel-Ausgleichselement der Spalt zwischen dem Bolzen und der den Bolzen umgebenden Buchse derart ausgefüllt wird, dass Buchse und Bolzen über das Spiel-Ausgleichselement zwar dauerhaft in Kontakt stehen, jedoch über das Spiel-Ausgleichselement weiterhin in radialer Richtung aber vornehmlich in axialer Richtung die Beweglichkeit des Bolzens und der Bolzenführung relativ zueinander gewährleistet ist. Durch das Aufheben des Radialspiels zwischen Bolzen und Bolzenführung sind nunmehr unerwünschte Störgeräusche im Betrieb des Fahrzeuges auf einfache Weise vermieden. Gleichzeitig ermöglicht das Spiel-Ausgleichselement die notwendige Verschiebbarkeit des Bremssattels zum Bremsträger, sodass auch weiterhin eine gleichmäßige Bremswirkung erzielt wird. Zudem ist mittels des Spiel-Ausgleichselements eine einfache Möglichkeit zum Ausgleichen etwaiger bei der Herstellung der Bauteile auftretender Fertigungstoleranzen und einem damit geringfügig variierenden Radialspiel der zueinander beweglichen Bauteile bewirkt.

Gemäß einer bevorzugten Weiterbildung der Erfindung ist das Spiel-Ausgleichselement dazu eingerichtet, eine Relativbewegung zwischen dem Bolzen und der Bolzenführung in radialer Richtung abzufedern und umgibt den Bolzen bevorzugt nahezu vollumfänglich. Etwaige auf den beweglichen Bremssattel einwirkende Kräfte und eine daraus resultierende Bewegung des Bremssattels in radialer Richtung zum Bolzen wird von dem Spiel-Ausgleichselement vereinfacht abgefangen, insbesondere abgefedert. Durch die Federwirkung des Spiel-Ausgleichselements wird die Bewegung des Bremssattels wirkungsvoll verlangsamt ohne Störgeräusche zu erzeugen, wobei das Ausgleichselement zusätzlich oder alternativ zur Federwirkung auch eine dämpfende Funktion haben kann. Mithilfe der Ausgestaltung des Spiel-Ausgleichselements in nahezu dem gesamten Spalt werden einwirkende Kräfte gleichmäßig über den Umfang des Ausgleichselements verteilt. Bolzen und Bolzenführung stehen über das eine Spiel-Ausgleichselement somit nahezu vollumfänglich miteinander in Kontakt. Anstelle eines einzigen Spiel-Ausgleichselements können auch mehrere solcher Ausgleichselemente verwendet werden, die dann im Spalt zwischen Bolzen und Bolzenführung in axialer oder Umfangsrichtung gleichmäßig verteilt oder zueinander beabstandet angeordnet sind.

Nach einer Weiterbildung der Erfindung weist das Spiel-Ausgleichselement entlang seiner axialen Erstreckungsrichtung mindestens einen, d. h. einen oder mehrere, elastisch verformbaren Materialabschnitt auf, der sich in Umfangsrichtung erstreckt. Vorzugsweise ist die Länge des Materialabschnitts entlang der axialen Erstreckung des Spiel-Ausgleichselement im Verhältnis zu der Gesamtlänge des Spiel-Ausgleichselements kurz, vorzugsweise geringer als 25%, 10% oder 5% jener Gesamtlänge. Über den Materialabschnitt wird der unmittelbare und federnde Kontakt des Bolzens mit der Bolzenführung, insbesondere mit der den Bolzen umgebenden Buchse der Bolzenführung, bewirkt. Durch den in axialer Richtung minimierten Kontakt wird die Axialverschieblichkeit des Bremssattels zum Bolzen und damit zum Bremsträger der Fahrzeugbremse verbessert. Der bzw. die elastisch verformbaren Materialabschnitte am Ausgleichselement erstrecken sich in Umfangsrichtung des Spiel-Ausgleichselements vorzugsweise vollumfänglich.

**In** einer bevorzugten Ausführungsform weist das Spiel-Ausgleichselement entlang seiner axialen Erstreckungsrichtung zwei im Abstand zueinander ausgebildete elastisch verformbare Materialabschnitte auf. **In** einer weiteren Ausführungsform können auch mehr als zwei elastisch verformbare Materialabschnitte am Ausgleichselement vorgesehen sein, die in axialer Richtung versetzt zueinander in dem Spiel-Ausgleichselement angeordnet sind. **In** Ausführungsformen, in denen die Materialabschnitte nicht vollumfänglich ausgebildet sind, sind die Materialabschnitte vorzugsweise in Umfangsrichtung zu einander versetzt.

Vorzugsweise weist das Spiel-Ausgleichselement, vorzugsweise im unmontierten Zustand, im Bereich seines oder seiner elastisch verformbaren Materialabschnitte(s) eine Bauteilhöhe auf, die größer ist als das Spaltmaß des Spaltes zwischen Buchse und Bolzen. Damit ist erreicht, dass das Spiel-Ausgleichselement im montierten Zustand, also angeordnet im Spalt zwischen der Buchse der Bolzenführung und dem Bolzen, vorgespannt wird. Dadurch erzeugt das Spiel-Ausgleichselement im Spalt zwischen der Buchse und dem Bolzen unmittelbar eine Federwirkung auf die vorzugsweise gleichmäßig im Abstand zueinander gehaltenen Bauteile. Einem direkten Kontakt des Bolzens mit der Bolzenführung wird durch das Spiel-Ausgleichselement insbesondere entgegengewirkt. Unter dem Spaltmaß ist vorliegend die Größe des Spaltes bei einem gleichgroßen umlaufenden Spalt zwischen Bolzen und Buchse zu verstehen, das dem halben Maß des Gesamtspieles des Bolzens in der Buchse entspricht.

Gemäß einer Weiterbildung des Bremssattels weist das Spiel-Ausgleichselement einen Hülsenkörper auf, der eine Materialstärke hat, die geringer ist als das Spaltmaß zwischen Buchse und Bolzen, und wobei der Hülsenkörper im Bereich seines bzw. seiner elastisch verformbaren Materialabschnitte eine am Hülsenkörper vorstehende Wölbung aufweist. Mit der Ausgestaltung des Spiel-Ausgleichselements als Hülsenkörper, der zudem eine geringere Materialstärke aufweist als das Spaltmaß zwischen Bolzen und Buchse, ist die Freigängigkeit des Bremssattels relativ zum üblicherweise feststehenden Bolzen bewirkt. Als Kontaktpunkte des Spiel-Ausgleichselements zum Bolzen oder der Buchse dient (bzw. dienen) vorzugsweise die am Hülsenkörper vorstehende(n) Wölbungen, die elastisch verformbar ausgebildet ist (sind). Bei einer auf die Wölbung(en) einwirkenden Druckkraft in vorzugsweise radialer Richtung, verformt sich diese bzw. weicht diese aus, sodass die notwendige Beweglichkeit sowohl in radialer als auch in axialer Richtung von Bolzen und Bolzenführung zueinander vorhanden ist.

Gemäß einer alternativen Ausgestaltung des Spiel-Ausgleichselements als Hülsenkörper ist erfindungsgemäß vorgesehen, dass die Buchse mindestens eine Ausnehmung, vorzugsweise mehrere über ihren Umfang verteilt angeordnete Ausnehmungen, aufweist, welche sich in axialer Richtung erstreckt bzw. erstrecken und in der bzw. denen jeweils ein Federteil des Spiel-Ausgleichselements angeordnet ist. Vorzugsweise wird das Spiel-Ausgleichselement aus mehreren, vorzugsweise mehr als drei, insbesondere acht Federteilen ausgebildet, die in einer entsprechenden Anzahl von Ausnehmungen innerhalb der Buchse angeordnet sind und jeweils in axialer Richtung zur Buchse verlaufen.

Jedes Federteil des Spiel-Ausgleichselements weist einen elastisch verformbaren Materialabschnitt auf, wobei mindestens ein Bereich jedes Federteiles mit der Außenseite des Bolzens in Anlage stehen und angrenzende oder benachbarte Bereiche, insbesondere die Endbereiche jedes Federteiles, mit dem Grund der Ausnehmung in der Buchse in Kontakt sind. **In** dieser Ausführungsform kann die Materialstärke der Federteile größer gewählt werden als das Spaltmaß zwischen der Buchse und dem Bolzen. Mit dem Vorsehen von Ausnehmungen in der Buchse kann das Spielmaß zwischen Bolzen und Buchse auf ein Minimum reduziert werden, wodurch das Spielmaß unabhängig von einer minimalen Materialstärke des Spiel-Ausgleichselements gewählt werden kann.

**In** einer Ausführungsform der Erfindung sind mehr als drei, insbesondere sechs, sieben, acht oder mehr gleichmäßig über den Umfang am Innendurchmesser der Buchse verteilt angeordnete Ausnehmungen vorgesehen, in denen jeweils ein Federteil des Spiel-Ausgleichselements angeordnet ist. Durch die gleichmäßig verteilte Anordnung der Federteile des Spiel-Ausgleichselements um den Bolzen herum, ist das Spielmaß über den gesamten Umfang des Bolzens nahezu gleich groß. Zudem ist vorzugsweise durch die um den Bolzen herum verteilt angeordneten Federteile die Größe der Kontaktfläche zwischen der Außenseite des Bolzens und dem Spiel-Ausgleichselement und damit die beim Verschieben des Bremssattels zu überwindende Reibkraft verringert.

Vorzugsweise ist der Hülsenkörper aus elastisch verformbarem Federstahl ausgebildet, wobei der Hülsenkörper vorzugsweise im Bereich der elastisch verformbaren Materialabschnitte zur Ausbildung der Wölbungen in axialer Richtung gestaucht ist. In einer Ausführungsform weist das Spiel-Ausgleichselement, bezogen auf seine axiale Erstreckungsrichtung, zwei im Abstand zueinander angeordnete vorstehende Wölbungen auf. Jede der am Spiel-Ausgleichselement ausgebildeten Wölbungen erstreckt sich in Umfangsrichtung über das gesamte Umfangsmaß des Spiel-Ausgleichselements. Mit den Wölbungen werden ringförmige Kontaktbereiche des Spiel-Ausgleichselements erzeugt, die nur an einem der über das Ausgleichselement zueinander gehaltenen Bauteile anliegen. Mit dem Stauchen des Hülsenkörpers bei der Ausbildung der Wölbungen ist bewirkt, dass die Wölbungen vorzugsweise eine zum restlichen Hülsenkörper gleichbleibende Materialstärke besitzen, wodurch die Festigkeit des Spiel-Ausgleichselements nicht beeinträchtigt wird.

Eine bevorzugte Ausgestaltung des Bremssattels sieht vor, dass die Buchse und/oder das Spiel-Ausgleichselement, bezogen auf ihre/seine Umfangsrichtung, eine Trennstelle aufweist, und dazu eingerichtet ist/sind, bezogen auf ihren/seinen Durchmesser um ein bestimmtes Maß aufgeweitet oder verkleinert zu werden. Eine derartig mit einer in axialer Richtung des Spiel-Ausgleichselements verlaufende Trennstelle ermöglicht ein vereinfachtes Anordnen der Buchse in der Bolzenführung bzw. des Spiel-Ausgleichselements im Spalt zwischen der Bolzenführung eines Bremssattels und dem Bolzen. Eine im Durchmesser veränderbare Buchse kann vereinfacht in eine Bohrung der Bolzenführung eingesetzt werden. Mit dem sich im Durchmesser veränderbaren Spiel-Ausgleichselement ist eine einfache Anpassung an etwaige Fertigungstoleranzen sowohl des Bolzens als auch der den Bolzen umgebenden Buchse der Bolzenführung möglich. Bei der Ausgestaltung des Spiel-Ausgleichselements ist somit vorrangig darauf zu achten, dass die Bauteilhöhe, also die Höhe über den elastisch verformbaren Materialabschnitten des Spiel-Ausgleichselements, größer ist als das halbe Maß des größtmöglichen Radialspiels zwischen Bolzen und Bolzenführung.

Vorzugsweise ist die Buchse in die Bolzenführung des Bremssattels eingepresst, wodurch eine Klemmwirkung zwischen der Außenseite der Buchse und der Innenseite der Bolzenführung erzeugt und die Buchse somit in axialer Richtung innerhalb der Bolzenführung fixiert wird.

In einer Ausführungsform der Erfindung ist vorgesehen, dass das Spiel-Ausgleichselement im unmontierten Zustand einen Außendurchmesser hat, der größer ist als der Innendurchmesser der Buchse und dazu eingerichtet ist, im montierten Zustand an der Innenseite der Buchse anzuliegen.

Der Hülsenkörper des Spiel-Ausgleichselements liegt vorzugsweise an der Innenseite der üblicherweise die Führungsfläche ausbildenden Buchse an. Die elastisch verformbaren Materialabschnitte erzeugen dann den federnden Kontakt zu der Außenseite des sich unmittelbar entlang der Materialabschnitte des Spiel-Ausgleichselements bewegenden Bolzens. In dieser Ausgestaltung bewegt sich bei einer Ausgleichsbewegung des Bremssattels die Bolzenführung mitsamt dem Spiel-Ausgleichselement relativ zum feststehenden Bolzen.

Eine alternative Ausgestaltung des Bremssattels sieht vor, dass das Spiel-Ausgleichselement im unmontierten Zustand einen Innendurchmesser hat, der kleiner ist als der Außendurchmesser des Bolzens und dazu eingerichtet ist, im montierten Zustand an der Außenseite des Bolzens anzuliegen. Mit dieser Ausgestaltung wird erreicht, dass das Spiel-Ausgleichselement mit seinem Hülsenkörper an der Außenseite des Bolzens anliegt. Insbesondere wird im montierten Zustand des Spiel-Ausgleichselements zwischen dem Ausgleichselement und der Außenseite des Bolzens eine Klemmwirkung erzeugt. Die am Spiel-Ausgleichselement ausgebildeten elastisch verformbaren Materialabschnitte erzeugen in dieser Ausgestaltung den dauerhaft federnden Kontakt zu der Innenseite der den Bolzen umgebenden Buchse der Bolzenführung. Bei einer Ausgleichsbewegung des Bremssattels bewegt sich in dieser Ausgestaltung die Bolzenführung relativ zu dem Bolzen und dem den Bolzen umgebenden Spiel-Ausgleichselement.

**In** Abhängigkeit von den jeweils vorbeschriebenen Ausführungsformen ist die - bzw. sind die - Wölbung(en) an der inneren Mantelfläche des Hülsenkörpers oder an der äußeren Mantelfläche des Hülsenkörpers vorstehend ausgebildet. Liegt der Hülsenkörper an der Innenseite der Buchse an, so steht bzw. stehen die Wölbung(en) an der inneren Mantelfläche des Hülsenkörpers in Richtung der Außenseite des Bolzens vor. Liegt der Hülsenkörper hingegen an der Außenseite des Bolzens an, so steht bzw. stehen die Wölbung(en) an der äußeren Mantelfläche des Hülsenkörpers in Richtung der Innenseite der Buchse vor. Beim Montieren des Spiel-Ausgleichselements im Spalt zwischen dem Bolzen und der Buchse wird bzw. werden vorrangig die radial vorstehende(n) Wölbung(en) elastisch verformt und damit am Spiel-Ausgleichselement die gewünschte Federspannung vorzugsweise über den gesamten Umfang des Spiel-Ausgleichselements erzeugt.

Vorzugsweise weist das Spiel-Ausgleichselement ein oder mehrere Arretierteile zum Positionieren des Spiel-Ausgleichselements in axialer Richtung in der Bolzenführung auf. Mithilfe des oder der Arretierteile wird das Spiel-Ausgleichselement entweder zur Bolzenführung oder dem in der Bolzenführung angeordneten Bolzen in Position gehalten. Damit ist ein ungewolltes Bewegen des Spiel-Ausgleichselements in axialer Richtung innerhalb der Bolzenführung vermieden.

**In** einer bevorzugten Ausführungsform wirkt das Arretierteil am Spiel-Ausgleichselement mit einer korrespondierenden Aufnahme bspw. an dem in der Bolzenführung angeordneten Bolzen zusammen. **In** dieser Ausführung bilden Bolzen und Spiel-Ausgleichselement eine funktionale Einheit, zu der die Bolzenführung mit der Buchse relativ beweglich ist.

Gemäß einer bevorzugten Weiterbildung des Bremssattels besitzt das Spiel-Ausgleichselement an einem Ende einen radial nach außen vorstehenden Anlageflansch, der der Buchse in Anlage bringbar ist. In dieser Ausführungsform kann das Spiel-Ausgleichselement axial relativ zu der Buchse und damit der Bolzenführung am Bremssattel positioniert werden. Mit dem an einem Ende radial nach außen vorstehenden Anlageflansch ist zugleich verhindert, dass das Spiel-Ausgleichselement sich axial relativ zur Buchse in der Bolzenführung bewegen kann. Um ferner einer ungewollten Bewegen der Buchse entgegenzuwirken, weist die Buchse, welche beispielsweise aus einem Kunststoffmaterial ausgebildet sein kann, vorzugsweise außenseitig ein Übermaß zum Innendurchmesser der Bolzenführung im Bremssattel auf.

Vorzugsweise verbindet der radial nach außen vorstehende Anlageflansch die mehreren in den Ausnehmungen angeordneten Federteile des Spiel-Ausgleichselements miteinander. Durch den die Federteile verbindenden Flansch werden diese axial wie auch in Umfangsrichtung des Spiel-Ausgleichselements zueinander positioniert. Die Federteile erstrecken sich vorzugsweise im Wesentlichen senkrecht zu dem im Wesentlichen eine Kreisringform aufweisenden Anschlagflansch. Die Federteile erstrecken sich vorzugsweise vom Anlageflansch aus in eine Richtung bzw. stehen an einer Stirnseite des Anlageflansche etwa senkrecht ab.

**In** einer anderen Weiterbildung des Bremssattels ist vorgesehen, dass das Spiel-Ausgleichselement an seinem zum Anlageflansch entgegengesetzten Ende ein nach außen vorspringendes Verrastteil aufweist, das im montierten Zustand mit dem entgegengesetzten Ende der Buchse zusammenwirkt.

Vorzugsweise ist das Verrastteil ein radial nach außen vorspringender Abschnitt an dem Hülsenkörper, vorzugsweise an einem zum Anlageflansch entgegengesetzten Ende des Hülsenkörpers. Der Anlageflansch und das Verrastteil übergreifen vorzugsweise die in der Bolzenführung angeordnete Buchse beidseitig in axialer Richtung, vorzugsweise an den Stirnseiten, wodurch eine einfache Arretierung des Spiel-Ausgleichselements relativ zur Buchse der Bolzenführung erzielt wird.

Vorzugsweise ist das Verrastteil als ein am Hülsenkörper elastisch verformbarer Abschnitt ausgebildet. Dadurch weicht das Verrastteil beim Einsetzen des Spiel-Ausgleichselements, insbesondere zur Innenseite der Buchse in der Bolzenführung, um ein vorbestimmtes Maß radial nach innen aus. Um das Einsetzen des Spiel-Ausgleichselements zu vereinfachen, ist das Verrastteil nur entlang eines Abschnitts des Umfangs an dem zum Anlageflansch entgegengesetzten, zweiten Ende des Spiel-Ausgleichselements angeordnet. In einer bevorzugten Ausführungsform des Bremssattels sind zwei oder mehr solcher Verrastteile am zweiten Ende des Spiel-Ausgleichselements vorgesehen, die weiter vorzugsweise jeweils in einem gleichmäßigen Winkelmaß zueinander entlang des Umfangs des Spiel-Ausgleichselements angeordnet sind. Zudem ist vorzugsweise mittels des Bolzens im montierten Zustand bewirkt, dass das Verrastteil durch den innenseitig angeordneten Bolzen in seiner Verraststellung blockiert und an einer Ausrückbewegung in radialer Richtung gehindert wird.

Die Erfindung ist vorstehend in einem ersten Aspekt unter Bezugnahme auf einen Bremssattel beschrieben worden. Die Erfindung betrifft in einem weiteren Aspekt ein Kit für eine Bolzenführung eines Bremssattels nach einer der vorstehend beschriebenen bevorzugen Ausführungsformen.

Die Erfindung löst die eingangs bezeichnete Aufgabe, indem das Kit einen Bolzen und eine um den Bolzen anordenbare Buchse aufweist, wobei das Kit ferner ein zwischen Bolzen und Buchse anordenbares Spiel-Ausgleichselement umfasst. Mithilfe des Spiel-Ausgleichselements, das zumindest abschnittsweise elastisch verformbar ist, wird im montierten Zustand, also wenn das Spiel-Ausgleichselement zwischen Buchse und Bolzen angeordnet ist und mit beiden Bauteilen, Bolzen und Buchse, in Kontakt steht, ein zwischen Bolzen und Buchse vorhandenes Spiel vorzugsweise vollständig ausgeglichen. Dabei ist vorzugsweise trotz des spielfreien Kontakts zwischen Bolzen und Buchse eine reibungsarme Gleitbewegung von Bolzen und Buchse relativ zueinander möglich, sodass die Freigängigkeit des Bremssattels an dem Bremsträger uneingeschränkt gewährleistet bleibt.

Die zum Bremssattel des ersten Aspekts beschriebenen Vorteile und bevorzugten Ausführungsformen sind zugleich auch Vorteile und bevorzugte Ausführungsformen des Kits gemäß dem zweiten Aspekt und umgekehrt, wobei insbesondere das Kit als Austauschteil in Verbindung mit einer Reparatur- oder Instandhaltungsmaßnahme an einem Bremssattel der Bremsanlage eines Nutzfahrzeugs verwendet werden kann und soll.

Die Erfindung wird nachfolgend anhand eines bevorzugten Ausführungsbeispiels unter Bezugnahme auf die beigefügten Figuren näher beschrieben. Die in der Beschreibung, in den Zeichnungen sowie in den Ansprüchen offenbarten Merkmale der Erfindung können sowohl einzeln als auch in beliebiger Kombination miteinander für die Weiterbildung der Erfindung wesentlich sein, sofern sie sich technisch nicht widersprechen.

Es zeigen:
- Fig. 1:: ein Ausführungsbeispiel eines Bremssattels in einer schematischen perspektivischen Darstellung;
- Fig. 2:: eine Ansicht eines Ausführungsbeispiels einer Bolzenführung am Bremssattel gemäß Fig. 1 in einer Schnittdarstellung;
- Fig. 3:: eine Detailansicht der Einzelheit II aus Fig. 2;
- Fig. 4 und 5: Ansichten eines weiteren Ausführungsbeispiels einer Bolzenführung in Schnittdarstellungen, und
- Fig. 6:: eine Detailansicht der Einzelheit IV aus Fig. 5.

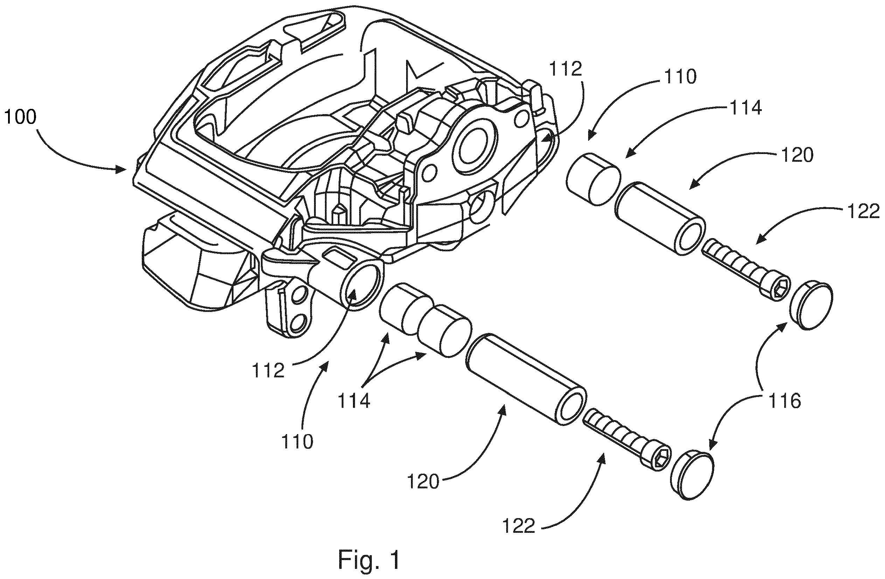

Fig. 1 zeigt eine schematische Darstellung eines Ausführungsbeispiels eines Bremssattels 100, an dem zur Vereinfachung weitere für die Erfindung nicht wesentliche Bestandteile, wie beispielsweise die am Bremssattel aufgenommenen Bremsbeläge, Niederhaltefedern oder Halteklammern für die Bremsbeläge, nicht gezeigt sind.

Der Bremssattel 100 weist eine Bolzenführung 110 auf, die zumindest eine Bohrung 112 bzw. Ausnehmung in dem Bremssattel 100 umfasst.

Die Bolzenführung 110 ist zum Verschieben des Bremssattels 100 zu einem nicht näher gezeigten Bremsträger in axialer Richtung A eingerichtet. Die Bolzenführung 110 umfasst ferner wenigstens eine in der Bohrung 112 angeordnete Buchse 114. In einer möglichen Ausführungsform wird bzw. werden die Buchsen 114 in die jeweilige Bohrung 112 eingepresst. Damit ist eine Klemmwirkung zwischen der Außenseite der Buchse(n) 114 und der Bohrung 112 im Bremssattel erzielt.

**In** einer jeweiligen Bolzenführung 110 ist im montierten Zustand jeweils ein Bolzen 120 angeordnet, der relativ zu der Buchse oder den Buchsen 114 beweglich geführt wird.

Um eine Relativbewegung zwischen dem insbesondere an dem Bremsträger befestigten Bolzen 120 und der Bolzenführung 110 zu gewährleisten, weist die Bolzenführung 110 und der Bolzen 120 eine Spielpassung auf. Jeder Bolzen 120 ist mithilfe einer Befestigungsschraube 122 mit dem nicht näher gezeigten Bremsträger verbunden. Um die Bolzenführung vor Umwelteinflüssen zu schützen, ist die Öffnung 112 durch eine Abdeckkappe 116 von außen verschlossen.

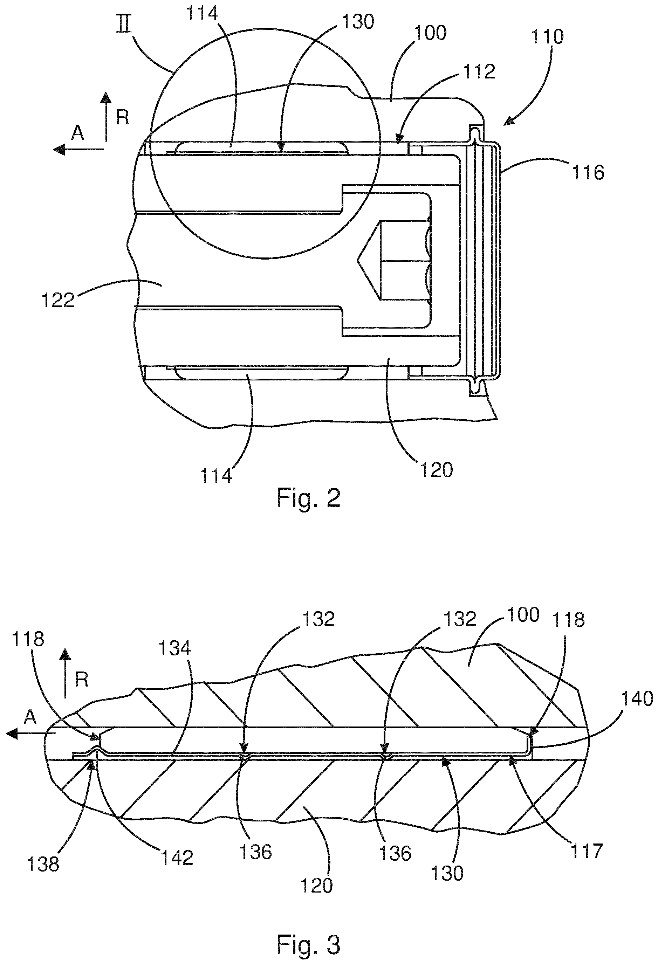

Ferner weist der Bremssattel 100, wie aus Fig. 2 ersichtlich, um unerwünschte Störgeräusche durch das Aufeinanderschlagen von Bolzenführung und Bolzen während des Betriebs des Nutzfahrzeuges zu vermeiden, zusätzlich ein im Spalt 117 zwischen der Buchse 114 und dem Bolzen 120 angeordnetes Spiel-Ausgleichselement 130 auf.

In einer Ausführung liegen erste Abschnitte des Spiel-Ausgleichselements 130 an der Buchse 114 und zweite Abschnitte des Spiel-Ausgleichselements 130 an dem Bolzen 120 an. Das Spiel-Ausgleichelement 130 hält die Bolzenführung 110 und den Bolzen 120 in radialer Richtung R auf Abstand zueinander.

Das Spiel-Ausgleichselement 130 ist zumindest abschnittsweise elastisch verformbar ausgebildet. Das Spiel-Ausgleichselement 130 ist dazu eingerichtet, eine in radialer Richtung R wirkende Federkraft auf die einander zugewandten Flächen von Bolzen 120 und Bolzenführung 110 zu erzeugen.

In einer Ausführungsform umgibt das Spiel-Ausgleichselement 130 den Bolzen nahezu vollumfänglich, sodass der Bolzen 120 über nahezu seinen gesamten äußeren Umfang gegenüber der Buchse abgestützt wird. In einer möglichen Ausführungsform weist das Spiel-Ausgleichselement 130, bezogen auf seine axiale Erstreckungsrichtung, einen oder mehrere elastisch verformbare Materialabschnitte 132 auf. Die verformbaren Materialabschnitte 132 können beispielsweise aus einem Material mit dämpfenden Eigenschaften ausgebildet sein.

Im unmontierten Zustand weist das Spiel-Ausgleichselement 130 im Bereich seines oder seiner elastisch verformbaren Materialabschnitte(s) 132 eine Bauteilhöhe auf, die größer ist als das Spaltmaß des gleichmäßig zwischen Buchse und Bolzen auszubildenden umlaufenden Spaltes 117. Damit ist gewährleistet, dass die Buchse 114 und der Bolzen 120 über das Spiel-Ausgleichselement vorzugsweise über einen Großteil des Umfangs dauerhaft in Kontakt miteinander stehen, ohne sich dabei jedoch selbst direkt zu berühren.

In einer Ausführungsform umfasst das Spiel-Ausgleichselement 130 einen Hülsenkörper 134. Der Hülsenkörper 134 hat eine Materialstärke, die geringer ist als das Spaltmaß des Spaltes 117 zwischen Buchse 114 und Bolzen 120.

Am Hülsenkörper 134 sind in der vorliegend gezeigten Ausführungsform zwei in axialer Richtung A zueinander ausgebildete, elastisch verformbare Materialabschnitte 132 vorgesehen. Die verformbaren Materialabschnitte 132 sind als am Hülsenkörper 134 vorstehende Wölbungen 136 ausgebildet.

In einer bevorzugten Ausführungsform ist der Hülsenkörper 134 aus einem elastisch verformbaren Federstahl hergestellt. Der aus dem Federstahl erzeugte Hülsenkörper 134 wird in einer Ausgestaltung zur Ausbildung der am Hülsenkörper vorstehenden Wölbungen 136 in axialer Richtung gestaucht.

In einer möglichen Ausführungsform ist das Spiel-Ausgleichselement 130 bezogen auf seine Umfangsrichtung mit einer nicht näher gezeigten Trennstelle versehen. Dadurch kann das Spiel-Ausgleichselement 130 bezogen auf seinen Durchmesser um ein vorbestimmtes Maß aufgeweitet oder zusammengedrückt werden. Damit wird die Montage des Spiel-Ausgleichselements 130 innerhalb der Bolzenführung 110 vereinfacht.

In einer nicht näher dargestellten Ausführungsform weist das Spiel-Ausgleichselement 130 im unmontierten Zustand einen Außendurchmesser auf, der größer ist als der Innendurchmesser der Buchse 114. Das Spiel-Ausgleichselement 130 legt sich, wie beispielhaft in Fig. 3 gezeigt, in dieser Ausgestaltung im montierten Zustand, insbesondere mit seinem Hülsenkörper 134, an der Innenseite der Buchse 114 an. Die als Wölbungen 136 ausgebildeten elastisch verformbaren Materialabschnitte 132 des Spiel-Ausgleichselements stehen in dieser Ausführung radial nach innen am Hülsenkörper 134 in Richtung des daran entlang bewegbaren Bolzens 120 vor.

In einer weiteren, ebenfalls nicht näher gezeigten Ausführungsform weist das Spiel-Ausgleichselement 130 im unmontierten Zustand einen Innendurchmesser auf, der kleiner ist als der Außendurchmesser des Bolzens 120. Im montierten Zustand liegt das Spiel-Ausgleichselement 130 in dieser Ausgestaltung mit seinem Hülsenkörper 134 dann an der Außenseite des Bolzens 120 an. Die als Wölbungen 136 ausgebildeten elastisch verformbaren Materialabschnitte 132, mittels den eine Federkraft in radialer Richtung R erzeugt wird, stehen nunmehr an der Außenseite des Hülsenkörpers radial nach außen in Richtung der Innenseite der Buchse 114 ab.

Zwischen dem Hülsenkörper 130 und dem jeweils damit in Anlage stehenden Bauteil (Buchse 114 oder Bolzen 120) wirkt eine Klemmkraft. Die Relativbewegung erfolgt dann unmittelbar zwischen dem Spiel-Ausgleichselement 130 und, je nach Ausgestaltung des Ausgleichselements 130, dem mit den Wölbungen 136 in Kontakt stehenden Bauteil, also der Buchse 114 oder dem Bolzen 120.

In einer Ausführungsform des Spiel-Ausgleichselements sind, wie aus Fig. 3 im Detail zu entnehmen, am Spiel-Ausgleichselement 130 mehrere Arretierteile 138 zum Positionieren des Spiel-Ausgleichselements in axialer Richtung A in der Bolzenführung 110 vorgesehen.

Das Spiel-Ausgleichselement 130 weist an einem (ersten) Ende einen radial nach außen vorstehenden Anlageflansch 140 und an dem zum Anlageflansch entgegengesetzten (zweiten) Ende des Spiel-Ausgleichselements 130 ein nach außen vorspringendes Verrastteil 142 auf.

Anlageflansch und Verrastteil 142 sind in der gezeigten Ausführungsform dazu eingerichtet, im montierten Zustand des Spiel-Ausgleichselements 130 mit den Stirnseiten 118 der Buchse 114 zusammenzuwirken. Die Arretierteile 138 des Spiel-Ausgleichselements 130 arretieren dieses relativ zu der in die Bolzenführung eingepressten Buchse 114 durch seitliches Übergreifen der Verrastteile.

**In** einer Ausführungsform ist das Verrastteil an dem dem Anlageflansch entgegengesetzten Ende des Spiel-Ausgleichselements 130 als ein am Hülsenkörper elastisch verformbarer Abschnitt ausgebildet. Beim Einsetzen des Spiel-Ausgleichselements in die Bolzenführung weicht das Verrastteil 142 durch Verformung am Hülsenkörper aus. Der Anlageflansch 140 und das Verrastteil 142 sind in der gezeigten Ausführungsform einteilig mit dem Hülsenkörper 134 ausgeführt.

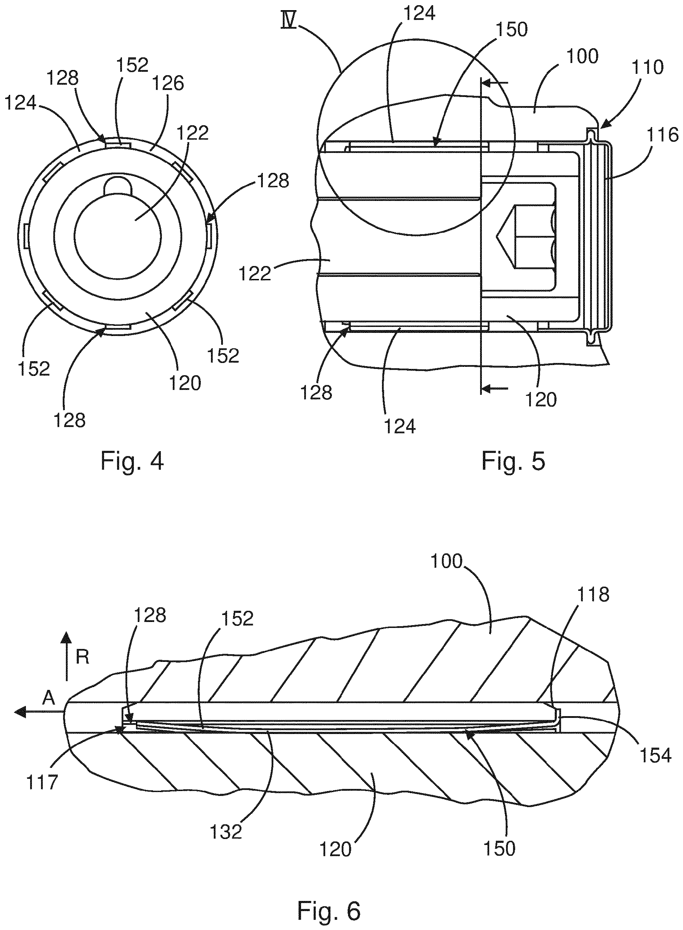

Die Fig. 4 und 5 zeigen eine weitere Ausgestaltung einer Bolzenführung 110 für den Bremssattel 100 (Fig. 1). Die Bolzenführung 110 weist ebenfalls eine Bohrung 112 im Bremssattel 100 auf.

Innerhalb der Bohrung 112 der Bolzenführung 110 ist eine Buchse 124 angeordnet. Die Buchse 124 weist eine Trennstelle 126 auf, wodurch das Einpressen der Buchse 124 in die Bohrung 112 vereinfacht ist. Zwischen der Außenseite der Buchse 124 und der Wandung der Bohrung 112 im Bremssattel 100 wirkt eine die Buchse 124 arretierende Klemmkraft.

Wie insbesondere aus Fig. 4 ersichtlich, weist die Buchse 124 mehrere über den Umfang verteilt angeordnete Ausnehmungen 128 auf, welche sich in axialer Richtung der Buchse erstrecken und dazu eingerichtet sind, Abschnitte eines Spiel-Ausgleichselements 150 aufzunehmen. Insbesondere sind in jeder Ausnehmung Federteile 152 des Spiel-Ausgleichselements 150 angeordnet, die dazu eingerichtet sind, eine Relativbewegung zwischen dem Bolzen 120 und der Bolzenführung 110 in radialer Richtung R abzufedern. Insbesondere erzeugen die Federteile eine in Umfangsrichtung gleichmäßig verteilte in radialer Richtung R wirkende Federkraft auf die einander zugewandten Flächen von Bolzen 120 und Bolzenführung 110.

**In** der gezeigten Ausführung weist das Spiel-Ausgleichselement 150 acht Federteile 52 und die mit dem Spiel-Ausgleichselement 150 korrespondierende Buchse 124 acht Ausnehmungen auf. Die Federteile 152 des Spiel-Ausgleichselements 150 sind jeweils in den Ausnehmungen 128 der Buchse 124 angeordnet ist.

Wie Fig. 6 verdeutlicht, können durch die ineinandergreifende Ausgestaltung von Buchse 124 und Spiel-Ausgleichselement 150 der Spalt 117 und damit das Spielmaß zwischen Innenseite der Buchse 124 und der Außenseite des Bolzens 120 verringert ausgebildet werden.

Die Federteile 152 des Spiel-Ausgleichselements 150 sind an jeweils einem ersten Ende über einen Anlageflansch 154 miteinander verbunden. Der Anlageflansch 154 wirkt zudem mit der Stirnseite 118 der Buchse 124 zusammen. Insbesondere ist der Anlageflansch 154 dazu eingerichtet, die Federteile 152 in vorbestimmter Anordnung zueinander zu positionieren, wie aus Fig. 6 ersichtlich.

### Bezugszeichenliste (Teil der Beschreibung):

- 100: Bremssattel
- 110: Bolzenführung
- 112: Bohrung
- 114,124: Buchse
- 116: Abdeckkappe
- 117: Spalt
- 118: Stirnseite
- 120: Bolzen
- 122: Befestigungsschraube
- 126: Trennstelle
- 128: Ausnehmung
- 130, 150: Spiel-Ausgleichselement
- 132: Materialabschnitt
- 134: Hülsenkörper
- 136: Wölbung
- 138: Arretierteil
- 140, 154: Anlageflansch
- 142: Verrastteil
- 152: Federteil

- A: axiale Richtung
- R: radiale Richtung

## Patentansprüche

1. Bremssattel (100) für eine Fahrzeugbremse, insbesondere eine Nutzfahrzeug-Scheibenbremse, wobei der Bremssattel (100) eine Bolzenführung (110) zum axialen Verschieben des Bremssattels (100) zu einem Bremsträger, und
einen relativ zur Bolzenführung (110) axial verschieblichen Bolzen (120) aufweist,
wobei die Bolzenführung (110) eine den Bolzen (120) umgebende Buchse (114) aufweist,
**dadurch gekennzeichnet, dass**
der Bremssattel (100) zusätzlich ein im Spalt (117) zwischen der Buchse (114) und dem Bolzen (120) angeordnetes Spiel-Ausgleichselement (130, 150) aufweist,
wobei das Spiel-Ausgleichselement (130, 150) an der Buchse (114) und dem Bolzen (120) anliegt, und zumindest abschnittsweise elastisch verformbar ist.

2. Bremssattel (100) nach Anspruch 1,
**dadurch gekennzeichnet, dass** das Spiel-Ausgleichselement (130, 150) dazu eingerichtet ist, eine Relativbewegung zwischen dem Bolzen (120) und der Bolzenführung (110) in radialer Richtung (R) abzufedern, und vorzugsweise den Bolzen (120) nahezu vollumfänglich umgibt.

3. Bremssattel (100) nach Anspruch 1 oder 2,
**dadurch gekennzeichnet, dass** das Spiel-Ausgleichselement (130, 150) entlang seiner axialen Erstreckungsrichtung mindestens einen elastisch verformbaren Materialabschnitt (132) aufweist, der sich in Umfangsrichtung erstreckt.

4. Bremssattel (100) nach einem der vorstehenden Ansprüche,
**dadurch gekennzeichnet, dass** das Spiel-Ausgleichselement (130,150), vorzugsweise im unmontierten Zustand, im Bereich des Materialabschnitts (132) eine Bauteilhöhe aufweist, die größer ist als das Spaltmaß des Spaltes (117) zwischen Buchse und Bolzen (120).

5. Bremssattel (100) nach einem der vorstehenden Ansprüche,
**dadurch gekennzeichnet, dass** das Spiel-Ausgleichselement (130) einen Hülsenkörper (134) aufweist, der eine Materialstärke hat, die geringer ist als das Spaltmaß zwischen Buchse (114) und Bolzen (120), und wobei der Hülsenkörper (134) im Bereich des Materialabschnitts (132) eine am Hülsenkörper vorstehende Wölbung (136) aufweist.

6. Bremssattel (100) nach einem der vorstehenden Ansprüche 1 bis 4, **dadurch gekennzeichnet, dass** die Buchse (124) mindestens eine Ausnehmung (128), vorzugsweise mehrere über ihren Umfang verteilt angeordnete Ausnehmungen (128), aufweist, welche sich in axialer Richtung erstreckt und in der jeweils ein Federteil (152) des Spiel-Ausgleichselements (150) angeordnet ist.

7. Bremssattel (100) nach einem der vorstehenden Ansprüche,
**dadurch gekennzeichnet, dass** das Spiel-Ausgleichselement (130, 150) zumindest abschnittsweise aus elastisch verformbarem Federstahl ausgebildet ist.

8. Bremssattel (100) nach einem der vorstehenden Ansprüche,
**dadurch gekennzeichnet, dass** die Buchse (114, 124) und/oder das Spiel-Ausgleichselement (130, 150), bezogen auf ihre/seine Umfangsrichtung, eine Trennstelle aufweist und dazu eingerichtet ist/sind, bezogen auf ihren/seinen Durchmesser um ein bestimmtes Maß aufgeweitet oder verkleinert zu werden.

9. Bremssattel (100) nach einem der vorstehenden Ansprüche,
**dadurch gekennzeichnet, dass** das Spiel-Ausgleichselement (130, 150) im unmontierten Zustand einen Außendurchmesser hat, der größer ist als der Innendurchmesser der Buchse (114, 124) und dazu eingerichtet ist, im montierten Zustand an der Innenseite der Buchse anzuliegen.

10. Bremssattel (100) nach einem der Ansprüche 1 bis 7,
**dadurch gekennzeichnet, dass** das Spiel-Ausgleichselement (130, 150) im unmontierten Zustand einen Innendurchmesser hat, der kleiner ist als der Außendurchmesser des Bolzens (120) und dazu eingerichtet ist, im montierten Zustand an der Außenseite des Bolzens anzuliegen.

11. Bremssattel (100) nach einem der Ansprüche 5 bis 10,
**dadurch gekennzeichnet, dass** die Wölbungen (136) an der inneren Mantelfläche des Hülsenkörpers (134) oder an der äußeren Mantelfläche des Hülsenkörpers (134) vorstehend ausgebildet sind.

12. Bremssattel (100) nach einem der vorstehenden Ansprüche,
**dadurch gekennzeichnet, dass** das Spiel-Ausgleichselement (130, 150) ein oder mehrere Arretierteile (138) zum Positionieren des Spiel-Ausgleichselements (130) in axialer Richtung (A) in der Bolzenführung (110) aufweist.

13. Bremssattel (100) nach Anspruch 12,
**dadurch gekennzeichnet, dass** das Spiel-Ausgleichselement (130, 150) an einem Ende einen radial nach außen vorstehenden Anlageflansch (140, 154) hat, der mit einem Ende der Buchse (114) in Anlage bringbar ist, und/oder welcher vorzugsweise die mehreren in den Ausnehmungen (128) angeordneten Federteile (152) des Spiel-Ausgleichselementes (150) miteinander verbindet.

14. Bremssattel (100) nach Anspruch 13,
**dadurch gekennzeichnet, dass** das Spiel-Ausgleichselement (130) an seinem zum Anlageflansch (140) entgegengesetzten Ende ein nach außen vorspringendes Verrastteil (142) aufweist, das im montierten Zustand mit dem anderen Ende der Buchse (114) zusammenwirkt, wobei das Verrastteil (142) vorzugsweise elastisch verformbar ist

15. Kit für eine Bolzenführung (110) eines Bremssattels (100) nach einem der vorstehenden Ansprüche, aufweisend
einen Bolzen (120), und
eine um den Bolzen (120) anordenbare Buchse (114),
**dadurch gekennzeichnet, dass**
das Kit ferner ein zwischen Bolzen (120) und Buchse (114) anordenbares Spiel-Ausgleichselement (130) aufweist.

## Claims

1. Brake caliper (100) for a vehicle brake, in particular a commercial vehicle disc brake, the brake caliper (100) having a bolt guide (110) for axially moving the brake caliper (100) with respect to a brake carrier, and a bolt (120) which is axially movable relative to the bolt guide (110),
the bolt guide (110) having a bushing (114) surrounding the bolt (120),
**characterized in that**
the brake caliper (100) additionally has a play compensation element (130, 150) arranged in the gap (117) between the bushing (114) and the bolt (120),
the play compensation element (130, 150) resting on the bushing (114) and the bolt (120) and being at least partially elastically deformable.

2. Brake caliper (100) according to claim 1,
**characterized in that** the play compensation element (130, 150) is designed to cushion a relative movement between the bolt (120) and the bolt guide (110) in the radial direction (R), and preferably surrounds the bolt (120) almost completely.

3. Brake caliper (100) according to either claim 1 or claim 2,
**characterized in that** the play compensation element (130, 150) has in its axial extension direction at least one elastically deformable material portion (132) which extends in the circumferential direction.

4. Brake caliper (100) according to any of the preceding claims,
**characterized in that** the play compensation element (130, 150), preferably in the unassembled state, has in the region of the material portion (132) a component height which is greater than the gap dimension of the gap (117) between the bushing and the bolt (120).

5. Brake caliper (100) according to any of the preceding claims,
**characterized in that** the play compensation element (130) has a sleeve body (134) which has a material thickness which is less than the gap dimension between the bushing (114) and the bolt (120), and the sleeve body (134) having a bulge (136) protruding from the sleeve body in the region of the material portion (132).

6. Brake caliper (100) according to any of claims 1 to 4,
**characterized in that** the bushing (124) has at least one recess (128), preferably a plurality of recesses (128) distributed over the circumference thereof, which recess extends in the axial direction and in each of which a spring part (152) of the play compensation element (150) is arranged.

7. Brake caliper (100) according to any of the preceding claims,
**characterized in that** the play compensation element (130, 150) is formed at least partially from elastically deformable spring steel.

8. Brake caliper (100) according to any of the preceding claims,
**characterized in that** the bushing (114, 124) and/or the play compensation element (130, 150) have/has a separation point in relation to the circumferential direction thereof and are/is designed to be expanded or reduced by a specific dimension in relation to the diameter thereof.

9. Brake caliper (100) according to any of the preceding claims,
**characterized in that** the play compensation element (130, 150) in the unassembled state has an outer diameter which is larger than the inner diameter of the bushing (114, 124) and is designed to rest against the inside of the bushing in the assembled state.

10. Brake caliper (100) according to any of claims 1 to 7,
**characterized in that** the play compensation element (130, 150) in the unassembled state has an inner diameter which is smaller than the outer diameter of the bolt (120) and is designed to rest against the outside of the bolt in the assembled state.

11. Brake caliper (100) according to any of claims 5 to 10,
**characterized in that** the bulges (136) are protrudingly formed on the inner lateral surface of the sleeve body (134) or on the outer lateral surface of the sleeve body (134).

12. Brake caliper (100) according to any of the preceding claims,
**characterized in that** the play compensation element (130, 150) has one or more locking parts (138) for positioning the play compensation element (130) in the axial direction (A) in the bolt guide (110).

13. Brake caliper (100) according to claim 12,
**characterized in that** the play compensation element (130, 150) has at one end a radially outwardly projecting contact flange (140, 154) which can be brought into contact with one end of the bushing (114) and/or which preferably connects the plurality of spring parts (152) of the play compensation element (150) arranged in the recesses (128) to one another.

14. Brake caliper (100) according to claim 13,
**characterized in that** the play compensation element (130) has at its end opposite the contact flange (140) an outwardly projecting latching part (142) which in the assembled state interacts with the other end of the bushing (114), the latching part (142) being preferably elastically deformable.

15. Kit for a bolt guide (110) of a brake caliper (100) according to any of the preceding claims, the kit comprising
a bolt (120), and
a bushing (114) which can be arranged around the bolt (120),
**characterized in that**
the kit further comprises a play compensation element (130) which can be arranged between the bolt (120) and the bushing (114).

## Revendications

1. Étrier de frein (100) pour un frein de véhicule, en particulier un frein à disque de véhicule utilitaire, dans lequel l'étrier de frein (100) présente
un guidage de boulon (110) permettant de faire coulisser axialement l'étrier de frein (100) vers un support de frein, et
un boulon (120) pouvant être coulissé axialement par rapport au guidage de boulon (110),
dans lequel le guidage de boulon (110) présente une douille (114) entourant le boulon (120),
**caractérisé en ce que**
l'étrier de frein (100) présente en outre un élément de compensation de jeu (130, 150) disposé dans l'interstice (117) entre la douille (114) et le boulon (120),
dans lequel l'élément de compensation de jeu (130, 150) vient en appui sur la douille (114) et le boulon (120), et est déformable élastiquement au moins dans certaines sections.

2. Étrier de frein (100) selon la revendication 1,
**caractérisé en ce que** l'élément de compensation de jeu (130, 150) est conçu pour amortir un mouvement relatif entre le boulon (120) et le guidage de boulon (110) dans la direction radiale (R), et entoure de préférence presque entièrement le boulon (120).

3. Étrier de frein (100) selon la revendication 1 ou 2,
**caractérisé en ce que** l'élément de compensation de jeu (130, 150) présente, le long de sa direction d'extension axiale, au moins une section de matériau (132) qui est déformable élastiquement et qui s'étend dans la direction circonférentielle.

4. Étrier de frein (100) selon l'une des revendications précédentes,
**caractérisé en ce que** l'élément de compensation de jeu (130, 150), de préférence à l'état non monté, présente dans la zone de la section de matériau (132) une hauteur de composant qui est supérieure à la dimension de l'interstice (117) entre la douille et le boulon (120).

5. Étrier de frein (100) selon l'une des revendications précédentes,
**caractérisé en ce que** l'élément de compensation de jeu (130) présente un corps de douille (134) qui possède une épaisseur de matériau qui est inférieure à la dimension de l'interstice entre la douille (114) et le boulon (120), et dans lequel le corps de douille (134) présente, dans la zone de la section de matériau (132), une courbure (136) faisant saillie sur le corps de douille.

6. Étrier de frein (100) selon l'une des revendications précédentes 1 à 4,
**caractérisé en ce que** la douille (124) présente au moins un évidement (128), de préférence plusieurs évidements (128) disposés de manière répartie sur sa circonférence, qui s'étend dans la direction axiale et dans lequel est disposée respectivement une partie élastique (152) de l'élément de compensation de jeu (150).

7. Étrier de frein (100) selon l'une des revendications précédentes,
**caractérisé en ce que** l'élément de compensation de jeu (130, 150) est réalisé au moins dans certaines sections en acier à ressorts déformable élastiquement.

8. Étrier de frein (100) selon l'une des revendications précédentes,
**caractérisé en ce que** la douille (114, 124) et/ou l'élément de compensation de jeu (130, 150) présentent un point de séparation par rapport à leur direction circonférentielle et sont conçus pour être élargis ou réduits d'une dimension déterminée par rapport à leur diamètre.

9. Étrier de frein (100) selon l'une des revendications précédentes,
**caractérisé en ce que** l'élément de compensation de jeu (130, 150) possède, à l'état non monté, un diamètre extérieur qui est supérieur au diamètre intérieur de la douille (114, 124) et est conçu pour venir en appui sur la face intérieure de la douille à l'état monté.

10. Étrier de frein (100) selon l'une des revendications 1 à 7,
**caractérisé en ce que** l'élément de compensation de jeu (130, 150) possède, à l'état non monté, un diamètre intérieur qui est inférieur au diamètre extérieur du boulon (120) et est conçu pour venir en appui sur la face extérieure du boulon à l'état monté.

11. Étrier de frein (100) selon l'une des revendications 5 à 10,
**caractérisé en ce que** les courbures (136) sont formées en saillie sur la surface d'enveloppe intérieure du corps de douille (134) ou sur la surface d'enveloppe extérieure du corps de douille (134).

12. Étrier de frein (100) selon l'une des revendications précédentes,
**caractérisé en ce que** l'élément de compensation de jeu (130, 150) présente une ou plusieurs parties de blocage (138) permettant le positionnement de l'élément de compensation de jeu (130) dans la direction axiale (A) dans le guidage de boulon (110).

13. Étrier de frein (100) selon la revendication 12,
**caractérisé en ce que** l'élément de compensation de jeu (130, 150) possède, au niveau d'une extrémité, une bride d'appui (140, 154) faisant saillie radialement vers l'extérieur, laquelle peut être amenée à venir en appui sur une extrémité de la douille (114), et/ou laquelle relie de préférence entre elles les parties élastiques (152) de l'élément de compensation de jeu (150) disposées dans les évidements (128).

14. Étrier de frein (100) selon la revendication 13,
**caractérisé en ce que** l'élément de compensation de jeu (130) présente, au niveau de son extrémité opposée à la bride d'appui (140), une pièce d'encliquetage (142) faisant saillie vers l'extérieur qui, à l'état monté, coopère avec l'autre extrémité de la douille (114), dans lequel la pièce d'encliquetage (142) est de préférence déformable élastiquement.

15. Kit pour un guidage de boulon (110) d'un étrier de frein (100) selon l'une des revendications précédentes, présentant
un boulon (120), et
une douille (114) pouvant être disposée autour du boulon (120),
**caractérisé en ce que**
le kit présente en outre un élément de compensation de jeu (130) pouvant être disposé entre le boulon (120) et la douille (114).
